# DEMANDE DE BREVET EUROPEEN

(11) **EP 2 293 039 A1**
(43) Date de publication de la demande: **09.03.2011**
(21) Numéro de dépôt: 10175280.6
(22) Date de dépôt: 03.09.2010
(51) Int. Cl.: G01M 17/08, B61K 9/00

(54) **Procédé de controle du comportement dynamique d'un véhicule ferroviaire**

(30) Priorité: 04.09.2009 FR 0904201
(71) Demandeur: Société Nationale des Chemins De Fer Français - SNCF, 75014 Paris (FR)
(72) Inventeur: Marion, Patrick, 94400, Vitry Sur Seine (FR); Caravieilhes, Jérôme, 91150, Etampes (FR)
(74) Mandataire: Bloch & Bonnétat

(57) **Abrégé**

Procédé d'évaluation de la conformité du comportement dynamique d'un véhicule ferroviaire (1) vis-à-vis des règles de stabilité des véhicules ferroviaires, au moyen d'un essai comportant une circulation dudit véhicule sur une voie ferrée, caractérisé par le fait qu'il comporte les étapes suivantes:
a. découpage de ladite voie en tronçons d'analyse,
b. classement desdits tronçons d'analyse en classes statistiques,
c. recalage par une méthode connue des distances odométriques des divers tronçons d'analyse,
d. mesure d'au moins une grandeur représentative du comportement dynamique du véhicule, en réponse aux imperfections de la voie,
e. dépouillement de ladite grandeur dans chacun des tronçons d'analyse parcourus par le véhicule, et extraction des valeurs remarquables de cette grandeur,
f. extraction, à partir de la base de données, des valeurs remarquables d'une caractéristique (Dr) représentative des imperfections de la voie,
g. appariement, sur chaque tronçon, des valeurs remarquables de la grandeur mesurée avec celles de la caractéristique de la voie,
h. établissement d'un diagramme donnant les valeurs remarquables de ladite grandeur en fonction des valeurs remarquables de la caractéristique d'imperfection et
i. comparaison des valeurs obtenues dans ce diagramme avec une valeur limite admissible.

## Description

Le domaine de la présente invention est celui des chemins de fer et plus précisément celui des essais de qualification des véhicules ferroviaires.

Les divers matériels roulants destinés à circuler sur des voies ferrées font l'objet d'évaluations pour obtenir une certification leur permettant de circuler sur le réseau d'un ou plusieurs des pays de l'Union européenne. Cette certification a pour but de garantir la sécurité des passagers et des agents des chemins de fer vis-à-vis des risques inhérents à ce mode de locomotion et en particulier du risque de déraillement.

Pour s'assurer de la sécurité du matériel roulant des essais sont tout d'abord effectués en statique pour mesurer divers paramètres comme la raideur des systèmes amortisseurs et de façon plus globale la fonction de transfert de la transmission des vibrations. Des essais dynamiques, en condition réelle de circulation sur des rails, doivent aussi être effectués, au cours desquels sont mesurés divers paramètres comme le niveau des vibrations, la valeur de l'accélération subie par la caisse des voitures ou les bogies, la force de contact entre la roue et le rail, ... etc. Ces essais sont faits dans des conditions moyennes, représentatives de l'utilisation normale et dans des conditions extrêmes pour juger de la qualité du matériel roulant, puis comparés aux valeurs fixées dans la norme de certification correspondante.

Les résultats de ces essais sont toutefois extrêmement dépendants de la qualité de la voie sur laquelle ils sont réalisés. De façon optimale ils devraient être réalisés sur une voie d'essai dont on connaîtrait parfaitement les caractéristiques. Mais pour des raisons de coût et d'absence de disponibilité de telles voies, les essais sont effectués sur des voies existantes, qui sont utilisées de façon régulière pour le trafic commercial et qui ne sont rendus disponibles pour les essais que de façon occasionnelle et affectées à cette tâche que dans des délais relativement courts. Ces voies sont bien évidemment imparfaites et plus ou moins adaptées à la conduite d'essais de qualification. Leurs caractéristiques précises sont par ailleurs connues de façon insuffisamment précise pour réaliser des essais de qualification dans les meilleures conditions. Des brevets ou demandes de brevets, tel que les documents US 5986547, FR 2741026, US 5775230, WO2005/036199 ou encore US 5433111, décrivent à ce propos des dispositifs de détection de la qualité de la voie, associés à des dispositifs de recalage d'odométrie, essentiellement pour s'assurer de la capacité d'une voie à faire circuler des trains. Ils ne permettent pas de tester un véhicule pour s'assurer de sa capacité à circuler.

Il n'est pas possible, pour les équipes en charge des essais, de faire réaliser, au préalable, une cartographie précise de la voie sur laquelle sera effectué l'essai. Cette opération serait de toute façon longue et extrêmement coûteuse et n'est donc pas envisageable de façon pratique.

Il est donc nécessaire de trouver une méthode la plus simple possible d'analyse de la qualité du matériel roulant, qui permette de tenir compte des imperfections de la voie sur laquelle a lieu l'essai et de discriminer les phénomènes qui proviennent de la voie de ceux qui proviennent du véhicule en essai. Elle doit permettre de mesurer, en temps réel au cours de l'essai, les corrections à apporter au référentiel des caractéristiques de la voie.

Une des caractéristiques essentielles qu'il convient de corriger, réside dans l'odométrie de la voie, c'est à dire dans la connaissance des distances des divers points remarquables sur la voie, par rapport à un point choisi comme origine. Cette odométrie corrigée doit en particulier donner avec précision les distances kilométriques d'entrée et de sortie des courbes de la voie.

Les bases de données qui caractérisent une voie la divisent en une série de tronçons, qui sont, soit des tronçons droits, dits en alignement, soit des tronçons en courbe circulaires, soit enfin des tronçons dits de raccordement, qui assurent la nécessaire transition entre les tronçons en alignement et les tronçons en courbe, au niveau du rayon de courbure et du dévers de la voie, le dévers étant la différence de hauteur d'un rail par rapport à l'autre. Tous ces tronçons rectilignes et courbes sont répertoriés et, pour chacun d'eux, est indiqué, entre autres, la distance odométrique d'entrée dans le tronçon, la distance odométrique de sortie, le rayon de courbure sur ce tronçon et le dévers appliqué à la voie. Ces bases de données comportant un certain nombre d'erreurs, dues entre autres à des mauvais positionnements des bornes géographiques (ou points kilométriques Pk) qui servent de points de repère aux conducteurs et qui sont installés sur le côté de la voie, ou encore à des dérives, dans le temps, dans la constitution physique de la voie.

Des méthodes ont été développées pour réaliser un essai en palliant, d'une part, l'insuffisance de connaissance de l'odométrie réelle de la voie sur laquelle sera réalisé l'essai et, d'autre part, l'écart éventuel entre les référentiels dû aux différents systèmes d'odométrie utilisés pour mesurer les distances. On connaît ainsi une méthode manuelle qui consiste à classer les divers tronçons en catégories géographiques statistiques puis à comparer les résultats de mesure effectués lors d'un essai avec les données sol correspondant à la catégorie statistique du tronçon. On comprend bien que cette méthode est fastidieuse à mettre en oeuvre. On connait aussi une méthode consistant à placer le long de la voie des bornes de synchronisation de façon à baliser les entrées et sorties réelles des courbes de la voie. Cette méthode est, comme déjà indiqué, longue et coûteuse et mal adaptée à la conduite d'essais sur une voie en service affectée tardivement à l'essai à conduire.

La présente invention a pour but de remédier à ces inconvénients en proposant une méthode extrêmement simple, même sur une voie imparfaitement connue, d'évaluation de la qualité d'un véhicule ferroviaire, qui ne nécessite pas de moyens coûteux, qui puisse être mise en oeuvre de façon automatique et qui ne soit pas sensible aux imprécisions sur les caractéristiques fournies par la base de données de référence de la voie ferrée sur laquelle a lieu l'essai d'évaluation ou de qualification dudit véhicule. Elle comporte en outre un procédé de recalage de l'odométrie de la voie.

A cet effet, l'invention a pour objet un procédé d'évaluation de la conformité du comportement dynamique d'un véhicule ferroviaire vis-à-vis des règles de stabilité des véhicules ferroviaires, au moyen d'un essai comportant une circulation dudit véhicule sur une voie ferrée, ladite voie étant décrite dans une base de données de référence par des indications sur sa géométrie repérées en référence à une distance odométrique depuis un point origine, ladite base de données comportant en outre des informations sur les imperfections de ladite voie repérées également par leur distance odométrique par rapport au point origine. Ce procédé est caractérisé par le fait qu'il comporte les étapes suivantes
a. découpage de ladite voie en tronçons d'analyse,
b. classement desdits tronçons d'analyse en classes statistiques regroupant les tronçons présentant des caractéristiques géométriques analogues,
c. recalage, par une méthode connue, des distances odométriques des divers tronçons d'analyse avec les distances odométriques des tronçons figurant dans la base de données,
d. mesure, lors de la circulation du véhicule sur la voie, d'au moins une grandeur (γ) représentative du comportement dynamique du véhicule, en réponse aux imperfections de la voie
e. dépouillement de ladite grandeur, dans chacun des tronçons d'analyse parcourus par le véhicule, et extraction des valeurs remarquables de cette grandeur sur chaque tronçon,
f. extraction, à partir de la base de données, des valeurs remarquables d'une caractéristique représentative des imperfections de la voie, dans chacun des tronçons d'analyse parcourus par le véhicule,
g. appartement, sur chaque tronçon, des valeurs remarquables de la grandeur mesurée avec celles de la caractéristique de la voie,
h. établissement d'un diagramme donnant les valeurs remarquables de ladite grandeur en fonction des valeurs remarquables de la caractéristique d'imperfection considérée, pour tous les tronçons d'analyse appartenant à une même classe statistique, et
i. comparaison des valeurs obtenues dans ce diagramme avec une valeur limite admissible.

Dans un mode particulier de réalisation, la caractéristique représentative des imperfections de la voie est le dressage de ladite voie.

Dans un autre mode de réalisation, la caractéristique représentative des imperfections de la voie est l'écartement des rails de ladite voie.

Dans un encore autre mode de réalisation, la caractéristique représentative des imperfections de la voie est le nivellement de ladite voie.

Avantageusement, le procédé comporte en outre une étape j de répétition des étapes f à i pour chaque caractéristique représentative d'une imperfection de la voie contenue dans la base de données de référence.

De façon préférentielle le procédé comporte en outre la réalisation des étapes a à j pour plusieurs vitesses de passage du véhicule sur la voie et une étape de détermination de la vitesse maximale autorisée en service commercial sur une voie en fonction de la vitesse pour laquelle la valeur maximale des imperfections présentées par ladite voie correspond à l'atteinte par une grandeur représentative du comportement du véhicule de sa valeur limite admissible.

Dans un mode particulier de réalisation, le découpage de la voie en tronçons d'analyse est effectué en fonction du rayon de courbure desdits tronçons.

Préférentiellement, les classes statistiques sont définies selon des intervalles de la valeur du rayon de courbure desdits tronçons d'analyse.

Dans un autre mode de réalisation, le découpage de la voie en tronçons d'analyse est effectué en fonction de la valeur du dévers de la voie sur lesdits tronçons.

Préférentiellement, les classes statistiques sont définies selon des intervalles de la valeur du dévers sur lesdits tronçons d'analyse.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une représentation schématique d'un véhicule en essai sur une voie ferrée,
- la figure 2 est une représentation schématique, en vue de dessus, d'une voie ferroviaire sur laquelle se déroule un essai de qualification.
- la figure 3 est une représentation schématique, en fonction de la distance odométrique, d'une information (ici, le rayon de courbure) contenue dans une base de données d'une voie ferroviaire ;
- la figure 4 est une vue schématique de l'enregistrement des données d'un capteur (ici, une accélération) lors d'un essai réalisé à une vitesse donnée sur la voie correspondante.
- la figure 5 montre en parallèle un enregistrement d'une grandeur, calculée à partir des valeurs de paramètres mesurés sur un véhicule en essai et l'évolution des imperfections en dressage de la voie, en fonction de l'odométrie de la voie.
- la figure 6 montre une analyse de l'amplitude des valeurs d'une grandeur représentative du comportement du véhicule en essai, en relation avec les imperfections en dressage de la voie sur laquelle celui-ci circule.

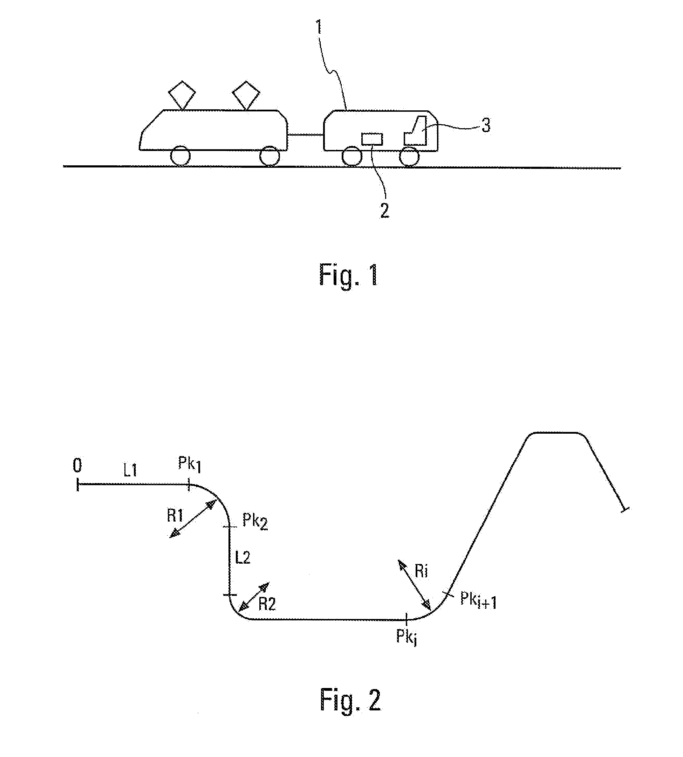

En se référant à la figure 1 on voit un train constitué pour l'évaluation du comportement dynamique d'un véhicule ferroviaire 1. Dans ce véhicule est installé un enregistreur de paramètres 2, raccordé à des capteurs placés dans le véhicule, qui mesurent des valeurs susceptibles de varier en fonction des imperfections de la voie. Ces données enregistrées sont analysées par un système d'évaluation 3 du véhicule, qui en déduit des grandeurs représentatives du comportement du véhicule et qui compare celles-ci à des valeurs limites admissibles.

La figure 2 représente une voie constituée par une suite de tronçons droits et courbes, ces deux types de tronçons étant raccordés par des tronçons de raccordement, non représentés. Les coordonnées d'entrée et de sortie des tronçons courbes sont données par les distances kilométriques Pki et Pki+1 à partir d'un point origine O ; les courbes sont décrites par leur rayon de courbure Ri.

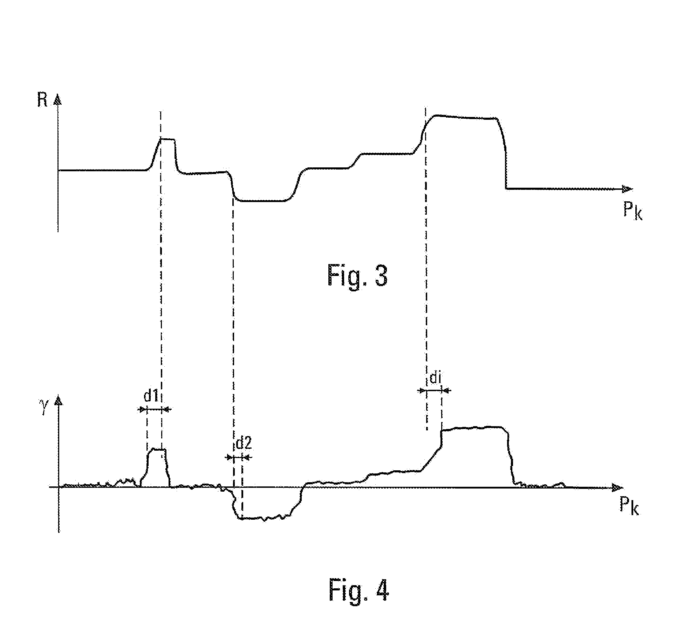

En se référant à la figure 3, on voit la représentation d'une des caractéristiques d'une voie ferroviaire (ici, le rayon de courbure) en fonction de la distance odométrique, telle qu'elle est issue de la base de données entretenue par le gestionnaire de la voie. Pour réaliser cette base de données, toutes les voies sont découpées en tronçons élémentaires aux caractéristiques homogènes, qui peuvent être des tronçons d'alignement, des tronçons de raccordement ou des tronçons courbes circulaires. Pour chaque tronçon la base de données fournit des informations, entre autres, de longueur du tronçon, au travers des distances odométriques des points de départ et d'arrivée du tronçon, et de rayon de courbure lorsque celui-ci est courbe. Elle donne également pour les tronçons courbes la valeur du dévers qui est appliqué à la voie pour faciliter la tenue en courbe des trains.

La figure 4 donne les résultats d'enregistrement d'un paramètre de mesure, lorsqu'un train en essai circule sur la voie correspondante. Ce paramètre peut être une accélération subie par une voiture ou un bogie, un niveau vibratoire, la force d'appui d'une roue sur le rail ou toute autre valeur dictée par les besoins de la qualification recherchée. Il est exprimé en fonction de la distance odométrique Pk, placée en abscisses et mesurée à partir du point origine O de la voie. Cette représentation est choisie pour être homogène avec les paramètres descriptifs de la voie (rayon, dévers, ...) qui sont eux aussi exprimés en fonction de cette distance odométrique. L'abscisse pour chacun des points de la courbe est déterminée en transposant l'enregistrement, effectué originellement en fonction du temps, par une intégration de la vitesse linéaire du véhicule en essai.

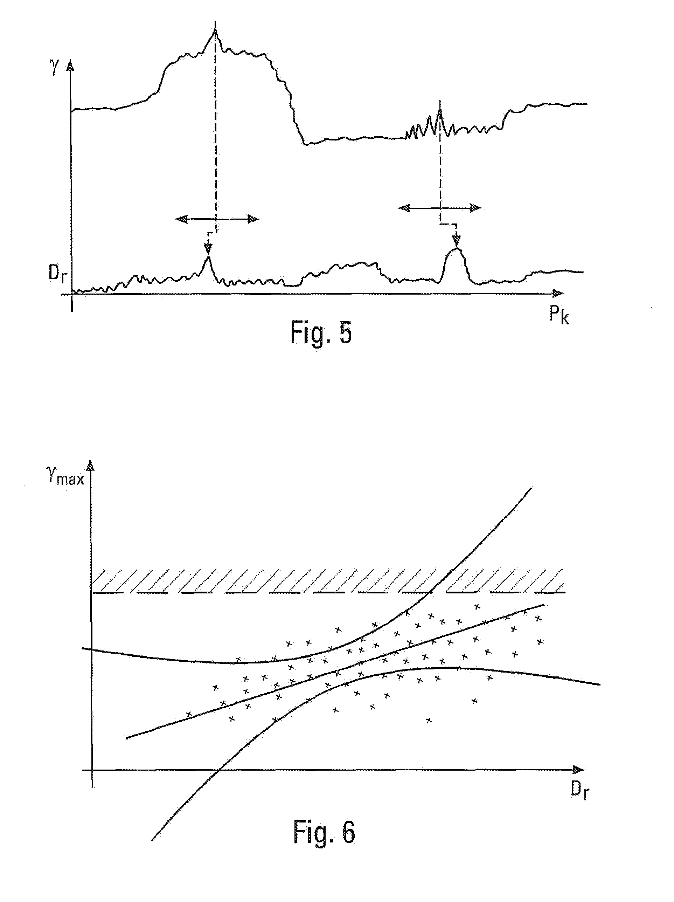

Sur la figure 5 sont représentées deux courbes, l'une donnant, après recalage de l'odométrie, l'évolution, le long d'un tronçon particulier, d'une grandeur mesurée à partir d'un capteur (ici l'accélération subie) installé sur le véhicule en essai l'autre donnant l'évolution du dressage de la voie sur ce tronçon, tel qu'il est issu de la base de données de référence. Le dressage représente l'écart, dans le plan horizontal, de l'axe de la voie par rapport au tracé idéal. Il constitue une imperfection de la voie, au même titre que des défauts d'écartement des rails ou de nivellement de la voie ; toutes ces imperfections sont a priori répertoriées dans la base de données de référence de la voie.

La figure 6 est une représentation des amplitudes de ces grandeurs mesurées, en fonction de l'amplitude des imperfections de dressage relevées sur la voie. Elle indique également la valeur limite admissible pour la grandeur considérée.

Pour pouvoir associer les résultats de mesures au tracé de la voie et relier les réponses du véhicule en essai aux défauts de celle-ci, il importe tout d'abord de recaler l'arrivée sur un tronçon avec la distance de référence d'entrée dans le tronçon figurant dans la base de données. Une mesure de distance calculée à partir d'un compte-tour sur un essieu, associée à la mesure de la vitesse linéaire du train, ne donnerait pas de résultat fiable à cause des phénomènes de glissement de la roue sur le rail ; une mesure de positionnement par GPS se heurterait, quant à elle, aux tunnels et aux zones d'ombre de ce système.

Pour pallier ces inconvénients il est proposé d'adjoindre aux enregistrements effectués, une mesure instantanée de la vitesse angulaire de lacet subie par la voiture en essai. Cette mesure peut être réalisée, par exemple, à l'aide d'un gyromètre, La mesure de la vitesse angulaire de lacet est alors rapportée à la vitesse linéaire du train pour trouver la valeur instantanée du rayon de courbure du tronçon sur lequel circule le véhicule en essai. Connaissant le rayon de courbure mesuré, il est possible de détecter les instants où le rayon de courbure évolue ou bien où il devient constant, et donc d'identifier les distances odométriques pour lesquels le véhicule est entré dans un tronçon en alignement ou dans un tronçon courbe.

La comparaison de la valeur du rayon de courbure avec celui théorique fourni par la base de donnée donne l'écart d en distance odométrique existant entre les valeurs odométriques des points d'entrée (ou de sortie) théoriques et réels des divers tronçons. Cette valeur d étant, a priori, connue en continu il est possible d'effectuer un recalage précis pour chaque tronçon et ainsi d'analyser les enregistrements en relation avec les informations de la base de donnée en éliminant les erreurs dues au positionnement des points kilométriques dans la base de données de référence. On peut alors voir comment réagit le véhicule en essai aux caractéristiques physiques de la voie et à ses imperfections locales, telles qu'elles sont fournies par la base de données de référence.

On peut ainsi mettre en évidence, à l'aide de l'enregistrement d'un seul paramètre de vitesse angulaire, pratiquement toutes les erreurs et imprécisions de la base de données de référence et, une fois qu'un recalage a été effectué, analyser dans l'absolu le comportement du véhicule, quelle que soit la voie affectée à l'essai et quel que soit le préavis donné pour cet essai.

L'invention porte sur l'analyse de la réponse en comportement dynamique d'un véhicule ferroviaire aux diverses imperfections de la voie. Elle est ici décrite en prenant pour paramètre d'entrée le dressage de la voie, mais le processus de qualification d'un véhicule s'intéresse à tous les types de défauts répertoriés dans les bases de données de référence d'une voie, et dont l'examen est prescrit par les normes de certification ferroviaire.

La première opération consiste à redéfinir le découpage de la voie en tronçons de plus petite taille que ceux figurant dans la base de données de référence. Ces tronçons de petite taille qui sont retenus pour conduire l'évaluation, sont définis par une norme de traitement de la stabilité des véhicules ferroviaires et seront dénommés tronçons d'analyse par la suite. A titre indicatif ils sont d'une longueur de 70 ou 100 m pour les tronçons courbes et de 250 ou 500 m pour les tronçons en alignement, en fonction de la vitesse prévue de circulation des trains en opération commerciale.

L'opération suivante consiste à classer les différents tronçons d'analyse en classes statistiques en regroupant, par exemple, tous les tronçons courbes qui ont des rayons de courbure compris entre deux valeurs déterminées (comme par exemple un rayon de courbure compris entre 400 et 600 m). L'analyse de la stabilité du véhicule sera ensuite effectuée, classe statistique par classe statistique, et le véhicule sera déclaré bon s'il remplit les conditions requises pour chacune des classes statistiques.

Pour chaque tronçon d'analyse et pour chaque paramètre du comportement dynamique à évaluer, on mesure une grandeur représentative du comportement du véhicule (une accélération, dans le cas de figure représenté sur la figure 4), et on recherche sur le tronçon d'analyse considéré si cette valeur a atteint une valeur remarquable en réponse à une imperfection de la voie ; comme valeur remarquable, il peut s'agir, par exemple, d'une valeur maximale ou bien d'un pic sur cette valeur (comme dans le cas de figure d'une accélération représentée sur la figure 4); il peut également s'agir de la valeur moyenne de la grandeur sur le tronçon, de son écart type à un centile donné, etc. On repère par ailleurs la distance odométrique pour laquelle cette valeur remarquable est atteinte.

On recherche parallèlement les valeurs remarquables des imperfections de la voie (le dressage dans le cas de figure de la figure 5) dans le tronçon d'analyse considéré, et on examine si cette valeur remarquable sur la voie peut être associée à une valeur remarquable relevée sur la grandeur mesurée pour le même tronçon d'analyse. Pour cela on n'apparie ces deux valeurs que si la distance odométrique qui les sépare est inférieure à une longueur convenue à l'avance ; dans la pratique, de façon conventionnelle, cette longueur est prise égale à la moitié de la longueur du véhicule en essai.

Le procédé selon l'invention se termine en reportant dans un graphique du type de celui de la figure 6, qui comporte, en abscisses, les valeurs remarquables des imperfections de la voie pour tous les tronçons d'une même classe statistique et, en ordonnées, les valeurs remarquables de la grandeur étudiée qui ont pu être associées à ces imperfections. Ces valeurs remarquables sont, pour finir, comparées à une valeur limite définie par le calcul et représentée sur la figure 6 par une droite des valeurs couramment rencontrées, entourée par une intervalle de confiance, dans lequel doivent se trouver les valeurs remarquables du paramètre examiné.

La qualification du véhicule pour une exploitation à la vitesse à laquelle a été effectué l'essai et sur une voie présentant des défauts analogue à ceux de la voie de l'essai, peut être prononcée, en ce qui concerne le paramètre examiné et la classe statistique de tronçons considérée, si aucune valeur de la caractéristique dynamique examinée ne dépasse une valeur prescrite par la norme. Cet examen pourra ensuite être conduit pour toutes les classes statistiques et pour tous les paramètres imposés par la norme.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention.

## Revendications

1. Procédé d'évaluation de la conformité du comportement dynamique d'un véhicule ferroviaire (1) vis-à-vis des règles de stabilité des véhicules ferroviaires, au moyen d'un essai comportant une circulation dudit véhicule sur une voie ferrée, ladite voie étant décrite dans une base de données de référence par des indications sur sa géométrie repérées en référence à une distance odométrique depuis un point origine, ladite base de données comportant en outre des informations sur les imperfections de ladite voie repérées également par leur distance odométrique par rapport au point origine, **caractérisé par le fait qu'**il comporte les étapes suivantes :
a. découpage de ladite voie en tronçons d'analyse,
b. classement desdits tronçons d'analyse en classes statistiques regroupant les tronçons présentant des caractéristiques géométriques analogues,
c. recalage par une méthode connue des distances odométriques des divers tronçons d'analyse avec les distances odométriques des tronçons figurant dans la base de données,
d. mesure, lors de la circulation du véhicule sur la voie, d'au moins une grandeur (γ) représentative du comportement dynamique du véhicule, en réponse aux imperfections de la voie,
e. dépouillement de ladite grandeur, dans chacun des tronçons d'analyse parcourus par le véhicule, et extraction des valeurs remarquables de cette grandeur sur chaque tronçon,
f. extraction, à partir de la base de données, des valeurs remarquables d'une caractéristique (Dr) représentative des imperfections de la voie, dans chacun des tronçons d'analyse parcourus par le véhicule,
g. appariement, sur chaque tronçon, des valeurs remarquables de la grandeur mesurée avec celles de la caractéristique de la voie,
h. établissement d'un diagramme donnant les valeurs remarquables de ladite grandeur en fonction des valeurs remarquables de la caractéristique d'imperfection considérée, pour tous les tronçons d'analyse appartenant à une même classe statistique, et
i. comparaison des valeurs obtenues dans ce diagramme avec une valeur limite admissible.

2. Procédé selon la revendication 1 dans lequel la caractéristique représentative des imperfections de la voie est le dressage de ladite voie.

3. Procédé selon la revendication 1 dans lequel la caractéristique représentative des imperfections de la voie est l'écartement des rails de ladite voie.

4. Procédé selon la revendication 1 dans lequel la caractéristique représentative des imperfections de la voie est le nivellement de ladite voie.

5. Procédé selon la revendication 1 comportant en outre une étape j de répétition des étapes f à i pour chaque caractéristique représentative d'une imperfection de la voie contenue dans la base de données de référence.

6. Procédé selon la revendication 5 comportant en outre la réalisation des étapes a à j pour plusieurs vitesse de passage du véhicule (1) sur la voie et une étape de détermination de la vitesse maximale autorisée en service commercial sur une voie en fonction de la vitesse pour laquelle la valeur maximale des imperfections présentées par ladite voie correspond à l'atteinte par une grandeur représentative du comportement du véhicule de sa valeur limite admissible.

7. Procédé selon l'une des revendications 1 à 6 dans lequel le découpage de la voie en tronçons d'analyse est effectué en fonction du rayon de courbure desdits tronçons.

8. Procédé selon la revendication 7 dans lequel les classes statistiques sont définies selon des intervalles de la valeur du rayon de courbure desdits tronçons d'analyse.

9. Procédé selon l'une des revendications 1 à 6 dans lequel le découpage de la voie en tronçons d'analyse est effectué en fonction de la valeur du dévers de la voie sur lesdits tronçons.

10. Procédé selon la revendication 9 dans lequel les classes statistiques sont définies selon des intervalles de la valeur du dévers sur lesdits tronçons d'analyse.
